# EUROPÄISCHE PATENTSCHRIFT

(11) **EP 3 651 603 B1**
(45) Veröffentlichungstag und Bekanntmachung des Hinweises auf die Patenterteilung: **02.06.2021**
(21) Anmeldenummer: 18734538.4
(22) Anmeldetag: 26.06.2018
(51) Int. Cl.: A44B 11/25, B60R 22/22, B60R 22/18

(54) **GURTSCHLOSSBAUGRUPPE**
BELT BUCKLE ASSEMBLY
ASSEMBLAGE DE BOUCLE DE CEINTURE

(30) Priorität: 10.07.2017 DE 102017115375
(43) Veröffentlichungstag der Anmeldung: 20.05.2020
(73) Patentinhaber: ZF Automotive Germany GmbH, 73553 Alfdorf (DE)
(72) Erfinder: KOLCKMANN, Georg, 73553 Alfdorf (DE)
(74) Vertreter: ZF Patentabteilung - DIPS
(86) Internationale Anmeldenummer: PCT/EP2018/067073
(87) Internationale Veröffentlichungsnummer: WO 2019/011646

(56) Entgegenhaltungen:
- EP-A1- 0 046 286
- WO-A1-2016/046891
- DE-U1- 8 812 887
- FR-A1- 2 987 013
- GB-A- 1 384 386
- GB-A- 2 309 483

## Beschreibung

Die Erfindung betrifft eine Gurtschlossbaugruppe.

Gurtschlossbaugruppen mit Ankerbeschlägen sowie Ankerbeschläge für Gurtschlösser sind aus dem Stand der Technik bekannt. Ankerbeschläge werden verwendet, um Gurtschlösser für Sicherheitsgurte beispielsweise in einem Fahrzeug zu befestigen. Hierzu sind die Ankerbeschläge im Fahrzeug mittels Befestigungseinrichtungen verankert. Die Gurtschlösser sind über Schlossbeschläge drehbar an den Ankerbeschlägen gelagert, wodurch jedes Gurtschloss im Fahrzeug ausgerichtet und somit ein ergonomischer Sitz des Sicherheitsgurtes gewährleistet werden kann. Ferner sind gewöhnlich Anschläge vorgesehen, die die möglichen Positionen des Schlossbeschlags auf einen bestimmen Bereich begrenzen.

Um den Raumbedarf möglichst gering zu halten, gibt es die Bestrebung, Gurtschlossbaugruppen möglichst kompakt zu gestalten. Jedoch wird die minimale Bauhöhe der Gurtschlossbaugruppe durch den Freiraum begrenzt, der notwendig ist, um den Schlossbeschlag am Ankerbeschlag drehbar zu lagern. Darüber hinaus erfordern verschiedene Anwendungsbereiche, beispielsweise in unterschiedlichen Fahrzeugtypen, individuell gestaltete Schlossbeschläge, die mit den Anschlägen des Ankerbeschlags derart zusammenwirken, dass der gewünschte Schwenkbereich der Gurtschlösser bereitgestellt wird. Zur Erstellung der Anschläge sind dabei zusätzliche Biegeoperationen und ein erhöhter Materialaufwand erforderlich.

Aus der WO 2016/046891 A1 ist eine Gurtschlossbaugruppe mit einem Ankerbeschlag und einem Schlossbeschlag bekannt, der um eine Drehachse drehbar am Ankerbeschlag befestigt ist. Der Ankerbeschlag weist eine Ausnehmung auf und der Schlossbeschlag ragt in wenigstens einer Position abschnittsweise in diese Ausnehmung hinein.

Die DE 88 12 887 U1 beschreibt einen Ankerbeschlag mit einer Basis und einer Seitenwand, die einen Winkel von etwa 90° einschließen. Die Seitenwand umfasst ein Befestigungsmittel, das dazu vorgesehen ist, einen Schlossbeschlag drehbar zu befestigen.

Aufgabe der Erfindung ist es, eine Gurtschlossbaugruppe bereitzustellen, die besonders kompakt gestaltet ist und einen Schlossbeschlag aufweist, der flexibel für unterschiedliche Schwenkbereiche eingesetzt werden kann.

Zur Lösung der Aufgabe ist eine Gurtschlossbaugruppe vorgesehen, die ein Ankerbeschlag mit einer Ausnehmung und einen Schlossbeschlag aufweist, der um eine Drehachse drehbar am Ankerbeschlag befestigt ist. Die Gurtschlossbaugruppe ist derart gestaltet, dass der Schlossbeschlag in wenigstens einer Position abschnittsweise in die Ausnehmung hineinragt. Indem der Schlossbeschlag in wenigstens einer Position zumindest abschnittsweise in der Ausnehmung angeordnet ist oder beim Schwenken in die Ausnehmung eintauchen kann, wird der Freiraum vergrößert, die dem Schlossbeschlag für Drehungen zur Verfügung steht. Somit kann der Schlossbeschlag bzw. die Drehachse des Schlossbeschlags näher an dem Abschnitt des Ankerbeschlags vorgesehen sein, der die Ausnehmung enthält, und damit die Gurtschlossbaugruppe besonders kompakt gestaltet werden.

Der Schlossbeschlag kann einen Befestigungsabschnitt aufweisen, mittels dem der Schlossbeschlag am Ankerbeschlag befestigt ist, wobei der Befestigungsabschnitt in wenigstens einer Position des Schlossbeschlags zumindest abschnittsweise in der Ausnehmung angeordnet ist. Der Befestigungsabschnitt ist der Abschnitt des Schlossbeschlags, der am nächsten zum Ankerbeschlag angeordnet ist. Indem dieser Abschnitt in die Ausnehmung eintauchen oder zumindest abschnittsweise in der Ausnehmung aufgenommen sein kann, kann der erforderliche Bauraum der Gurtschlossbaugruppe reduziert werden.

Der Ankerbeschlag hat eine Seitenwand, die zur Befestigung des Schlossbeschlags vorgesehen ist, sowie eine Basis, die unter einem Winkel von kleiner als 180° zur Seitenwand steht. Der Winkel kann auch zwischen 30° und 150°, zwischen 80° und 100° oder im Wesentlichen 90° betragen. Durch diese winkelartige Gestaltung kann der Ankerbeschlag platzsparend eingebaut werden, beispielsweise indem sich die Basis in oder unter einen Sitz erstreckt und die Seitenwand neben dem Sitz hochsteht.

Die Basis umfasst erfindungsgemäß die Ausnehmung zumindest abschnittsweise. Somit kann durch die Ausnehmung verhindert werden, dass die unter einem Winkel von der Seitenwand abstehende Basis die Bewegungsfreiheit des Schlossbeschlags einschränkt. Ferner kann der durch die Ausnehmung zusätzliche bereitgestellte Freiraum genutzt werden, um den Schlossbeschlag bzw. die Drehachse des Schlossbeschlags näher an der Basis anzuordnen.

Die Seitenwand kann mittels eines Übergangsabschnitts mit der Basis verbunden sein. Die Ausnehmung kann dabei zumindest abschnittsweise im Übergangsabschnitt vorgesehen sein. Der Übergangsabschnitt, insbesondere wenn er eine Krümmung aufweist, schränkt den Raum ein, in dem der Schlossbeschlag, insbesondere drehbar, angeordnet werden kann. Diese Einschränkung kann dadurch aufgehoben werden, dass die Ausnehmung im Übergangsabschnitt angeordnet ist und den erforderlichen Freiraum für den Schlossbeschlag bereitstellt. Der Übergangsabschnitt ist beispielsweise ein Biegeabschnitt, wie er typischerweise bei Blechbiegeteilen zu finden ist.

Die Basis kann eine Befestigungseinrichtung zur Befestigung der Gurtschlossbaugruppe aufweisen, beispielsweise in Form eines Durchgangslochs. Mittels der Befestigungseinrichtung wird eine sichere Befestigung der Gurtschlossbaugruppe, beispielsweise in einem Fahrzeug, gewährleistet. Ferner kann durch die Befestigungseinrichtung die Montage einfach und fehlerfrei gestaltet werden.

Der Schlossbeschlag kann auf der Seite der Seitenwand vorgesehen sein, auf der sich die Basis von der Seitenwand weg erstreckt. Das heißt, der Schlossbeschlag ist auf der Innenseite des Ankerbeschlags vorgesehen. Dies hat den Vorteil, dass der Schlossbeschlag auf der gegenüber der Außenseite geschützten Innenseite der Seitenwand gelagert ist, wodurch die Funktionsfähigkeit des Lagers sichergestellt und eine Verletzung von Personen ausgeschlossen werden kann. Ferner kann die Basis genutzt werden, um beispielsweise als Anschlag mit dem Schlossbeschlag zu interagieren und auf diese Weise weitere Funktionen bereitzustellen.

Der Schlossbeschlag kann einen ersten Schlossanschlag aufweisen, der dazu ausgebildet ist, an einem ersten Ankeranschlag des Ankerbeschlags anzuschlagen. Der erste Ankeranschlag begrenzt die Drehung des Schlossbeschlags in einer ersten Drehrichtung. Über die ersten Ankeranschläge lässt sich somit der Winkel einstellen, bis zu welchem sich der Schlossbeschlag in der ersten Drehrichtung gegenüber dem Ankeranschlag verstellen lässt.

Der Schlossbeschlag kann einen zweiten Schlossanschlag aufweist, der dazu ausgebildet ist, an einem zweiten Ankeranschlag des Ankerbeschlags anzuschlagen. Der zweite Ankeranschlag begrenzt die Drehung des Schlossbeschlags in einer zweiten Drehrichtung. Die erste und die zweite Drehrichtung sind insbesondere zueinander entgegengesetzt. Somit kann ein bestimmter Bereich vorgegeben sein, in dem sich der Schlossanschlag verstellen lässt.

Die Ausnehmung kann den ersten und/oder zweiten Ankeranschlag umfassen. Die Ankeranschläge werden insbesondere durch die Wände gebildet, die die Ausnehmung begrenzen. Das bedeutet, dass der entsprechende Schlossanschlag in die Ausnehmung hineinragt, wenn ein Schlossanschlag mit dem jeweiligen Ankeranschlag in Anschlag ist. Auf diese Weise können die Ankeranschläge kostengünstig und raumsparend vorgesehen sein.

Der Schlossbeschlag kann spiegelsymmetrisch zu einer Mittelebene gebildet sein. Die Mittelebene wird hierbei insbesondere durch eine Ebene gebildet, in der die Drehachse liegt. Durch diese Gestaltung ist der Schlossbeschlag kostengünstig herstellbar und kann als Gleichteil in verschiedenen Gurtschlossbaugruppen vorgesehen sein.

Die Ausnehmung kann asymmetrisch zur Drehachse gebildet sein. Das heißt, dass die Ausnehmung nicht spiegelsymmetrisch zu einer Ebene gebildet ist, in der die Drehachse liegt. Auf diese Weise können die Ankeranschläge derart vorgesehen sein, dass sie in Kombination mit symmetrischen Schlossanschlägen eines Schlossbeschlags unterschiedliche Winkel für eine erste und eine entgegengesetzte zweite Drehrichtung bereitstellen, bis zu welchen sich der Schlossbeschlag gegenüber dem Ankeranschlag verstellen lässt.

Weitere Vorteile und Merkmale ergeben sich aus der nachfolgenden Beschreibung in Verbindung mit den beigefügten Zeichnungen. In diesen zeigen:
- Figur 1 eine erste Ausführungsform einer erfindungsgemäßen Gurtschlossbaugruppe mit einem erfindungsgemäßen Ankerbeschlag in einer Vorderansicht,
- Figur 2 die Gurtschlossbaugruppe aus Figur 1 in einer Seitenansicht,
- Figur 3 in einer Schnittansicht einen Ausschnitt der Gurtschlossbaugruppe aus Figur 1,
- Figur 4 eine zweite Ausführungsform einer erfindungsgemäßen Gurtschlossbaugruppe mit einem erfindungsgemäßen Ankerbeschlag in einer perspektivischen Ansicht,
- Figur 5 die Gurtschlossbaugruppe aus Figur 4 in einer Schnittansicht,
- Figur 6 in einer Schnittansicht einen Ausschnitt der Gurtschlossbaugruppe aus Figur 4,
- Figuren 7 und 8 eine dritte Ausführungsform einer erfindungsgemäßen Gurtschlossbaugruppe mit einem gekröpften Schlossbeschlag und einem erfindungsgemäßen Ankerbeschlag in einer perspektivischen Ansicht,
- Figur 9 in einer perspektivischen Ansicht den gekröpften Schlossbeschlag der Gurtschlossbaugruppe aus Figuren 7 und 8,
- Figur 10 in einer perspektivischen Ansicht einen ebenen Schlossbeschlag für eine erfindungsgemäße Gurtschlossbaugruppe,
- Figur 11 in einer perspektivischen Ansicht die Gurtschlossbaugruppe aus Figuren 7 und 8 in einer ersten Anschlagsposition, und
- Figur 12 in einer perspektivischen Ansicht die Gurtschlossbaugruppe aus Figuren 7 und 8 in einer zweiten Anschlagsposition.

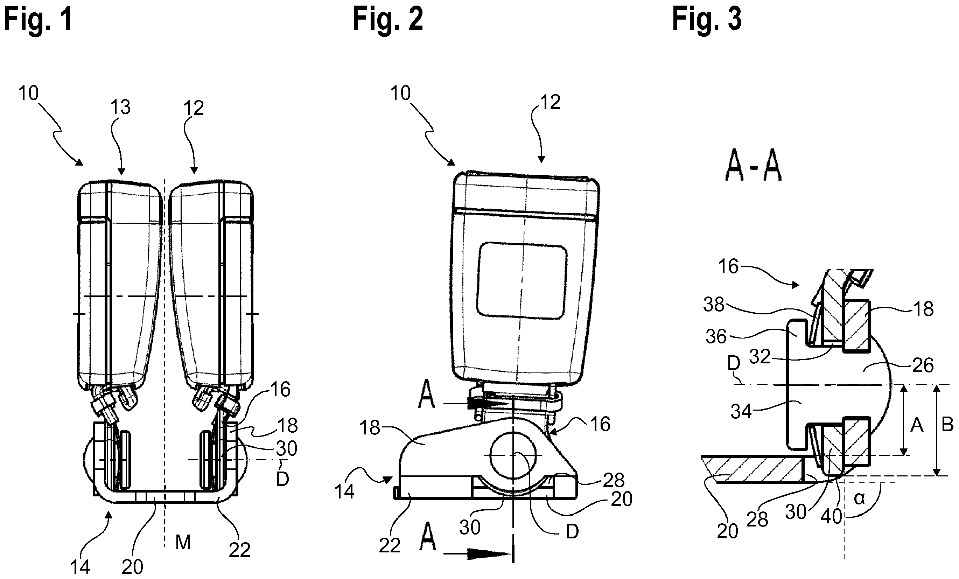

In Figur 1 ist eine Gurtschlossbaugruppe 10 in Form einer Doppelgurtschlossbaugruppe dargestellt. Die Gurtschlossbaugruppe 10 umfasst ein Gurtschloss 12 sowie ein zweites Gurtschloss 13, die an einem Ankerbeschlag 14 befestigt sind.

Der Ankerbeschlag 14 ist im Wesentlichen spiegelsymmetrisch zu einer Mittelebene M ausgebildet. Das zweite Gurtschloss 13 ist im Wesentlichen identisch zum Gurtschloss 12 ausgebildet und ist um 180° gedreht diesem gegenüberliegend angeordnet. Im Folgenden wird nur das Gurtschloss 12 sowie die zugehörige Hälfte des Ankerbeschlags 14 (in Figur 1 die Hälfte rechts der Mittelebene M des Ankerbeschlags 14) beschrieben. Die folgenden Ausführungen gelten jedoch in analoger Weise auch für das Gurtschloss 13 sowie der zugehörigen anderen Hälfte des Ankerbeschlags 14.

Grundsätzlich ist die Erfindung nicht auf eine Gurtschlossbaugruppe 10 mit zwei Gurtschlössern 12, 13 beschränkt, sondern die Gurtschlossbaugruppe 10 kann insbesondere auch nur ein Gurtschloss 12, 13 aufweisen.

Das Gurtschloss 12 umfasst einen Schlossbeschlag 16, mittels dem es um eine Drehachse D am Ankerbeschlag 14 drehbar gelagert ist.

Der Ankerbeschlag 14 umfasst eine Seitenwand 18, an der das Gurtschloss 12 befestigt ist, sowie eine Basis 20, die zur Befestigung der Gurtschlossbaugruppe 10 vorgesehen ist. Die Seitenwand 18 ist mittels eines gekrümmten Übergangsabschnitts 22 mit der Basis 20 einstückig verbunden. In einer alternativen Ausführungsform (nicht dargestellt) kann der Übergangsabschnitt 22 beliebig gestaltet sein.

Die Seitenwand 18 steht senkrecht zur Basis 20, d.h. der Winkel α beträgt 90°. Alternativ kann die Seitenwand 18 unter einem Winkel α kleiner 180° gegenüber der Basis 20 angeordnet sein. Insbesondere unter einem Winkel α zwischen 30° und 150° bzw. weiter bevorzugt zwischen 80° und 100°.

Der Ankerbeschlag 14 ist ein Blechbiegeteil.

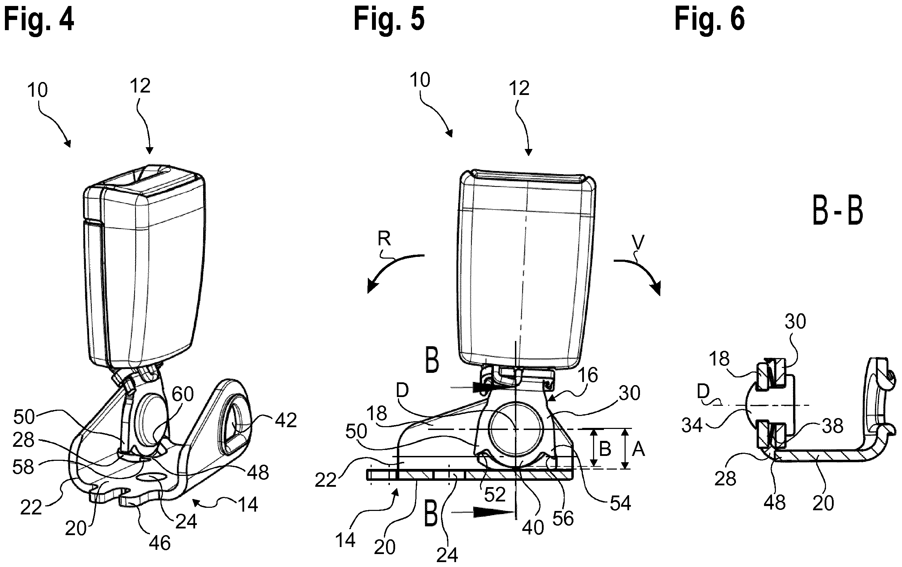

Die Basis 20 hat eine Befestigungseinrichtung 24 in Form eines Durchgangslochs (in Figur 1 nicht dargestellt, siehe Figur 4, die eine analoge Befestigungseinrichtung zeigt), die in der Mittelebene M angeordnet ist und zur Befestigung der Gurtschlossbaugruppe vorgesehen ist.

In der Seitenwand 18 ist eine kreisrunde Lageröffnung 26 in Form eines zylinderförmigen Durchgangslochs ausgebildet, dessen Mittelachse auf der Drehachse D liegt, und die zur Befestigung des Gurtschlosses 12 vorgesehen ist.

Der Ankerbeschlag 14 umfasst ferner eine Ausnehmung 28, die im Übergangsabschnitt 22 vorgesehen ist und sich in die Basis 20 erstreckt. In einer alternativen Ausführungsform kann sich die Ausnehmung 28 zusätzlich in die Seitenwand 18 erstrecken.

Die Ausnehmung 28 ist direkt unter der Drehachse D angeordnet, d. h., die Ausnehmung 28 umfasst zumindest einen Punkt einer Geraden, die senkrecht zur Basis steht und die Drehachse D schneidet.

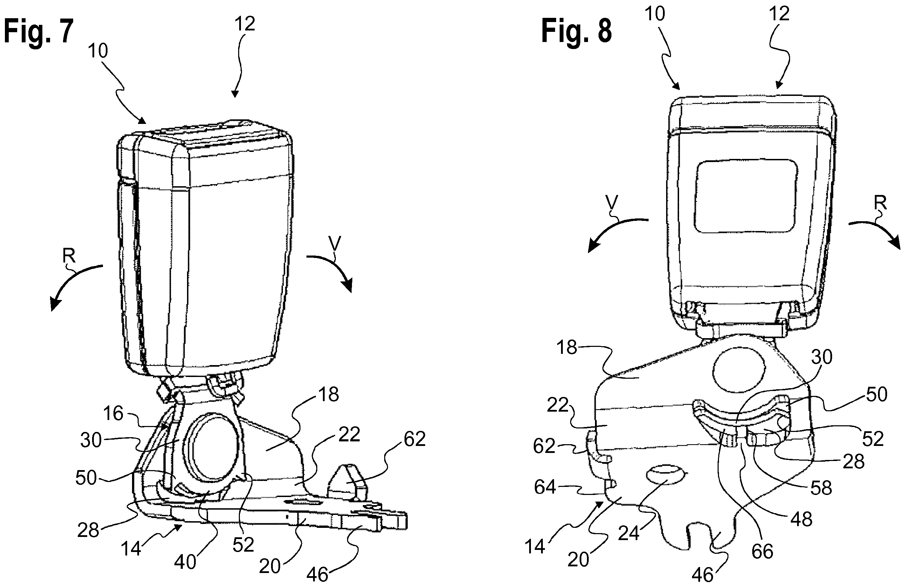

In der in Figur 2 dargestellten Ausführungsform ist die Ausnehmung 28 symmetrisch zur Drehachse D angeordnet. In einer alternativen Ausführungsform, wie beispielsweise in Figur 8 dargestellt, kann die Ausnehmung 28 auch asymmetrisch ausgebildet sein.

Der Schlossbeschlag 16 weist einen Befestigungsabschnitt 30 mit einer Durchgangsöffnung 32 auf. Das Gurtschloss 12 ist mittels einer Niete 34 an dem Ankerbeschlag 14 befestigt, wobei sich die Niete 34 in axialer Richtung durch die Lageröffnung 26 der Seitenwand 18 und der Durchgangsöffnung 32 des Befestigungsabschnitts 30 erstreckt.

Zwischen einem Ende 36 der Niete 34 und dem Befestigungsabschnitt 30 ist ein Federelement 38 in Form einer Tellerfeder angeordnet, die in axialer Richtung eine spielfreie Lagerung des Schlossbeschlags 16 an dem Ankerbeschlag 14 gewährleistet.

Der Schlossbeschlag 16 ist auf der Innenseite der Seitenwand 18 angeordnet, d. h. auf der Seite der Seitenwand 18, die der Mittelebene M zugewandt ist.

Der Abstand A der Drehachse D zur Basis 20 ist kleiner als der Abstand B der Drehachse D zu einem der Basis 20 zugewandten Ende 40 des Befestigungsabschnitts 30. Das bedeutet, dass der Befestigungsabschnitt 30 in die Ausnehmung 28 hineinragt. In der gezeigten Ausführungsform ist das Ende 40 des Befestigungsabschnitts 30 rotationssymmetrisch zur Drehachse D gestaltet, sodass der Befestigungsabschnitt 30 in allen Positionen des Gurtschlosses 12 zumindest abschnittsweise in die Ausnehmung 28 hineinragt. In einer alternativen Ausführungsform kann der Befestigungsabschnitt 30 auch derart gestaltet sein, dass der Befestigungsabschnitt 30 nur in bestimmten Positionen des Gurtschlosses 12 in die Ausnehmung 28 hineinragt.

Auf diese Weise kann der Abstand A der Drehachse D zur Basis 20 verringert und damit die Gurtschlossbaugruppe 10 kompakter gestaltet werden.

In den Figuren 4 bis 6 ist eine zweite Ausführungsform der Gurtschlossbaugruppe 10 gezeigt. Für gleiche Strukturen mit gleichen Funktionen sind im Folgenden daher entsprechende Bezugszeichen der ersten Ausführungsform vergeben.

In dieser zweiten Ausführungsform ist die Gurtschlossbaugruppe 10 eine Einzelschlossbaugruppe. Anstelle eines zweiten Gurtschlosses ist gegenüber dem Gurtschloss 12 eine Öffnung 42 in der zweiten Seitenwand 44 angeordnet. Die Basis 20 weist ferner an einem Ende einen gabelförmigen Befestigungsabschnitt 46 auf, der zur Verankerung der Gurtschlossbaugruppe 10 vorgesehen ist.

Die Ausnehmung 28 weist eine Anschlagnase 48 auf, die sich von der Basis 20 in der axialen Richtung der Drehachse D in die Ausnehmung 28 erstreckt.

Die Anschlagnase 48 ist in einer Ebene angeordnet, die senkrecht zur Basis 20 steht und in axialer Richtung der Drehachse D verläuft.

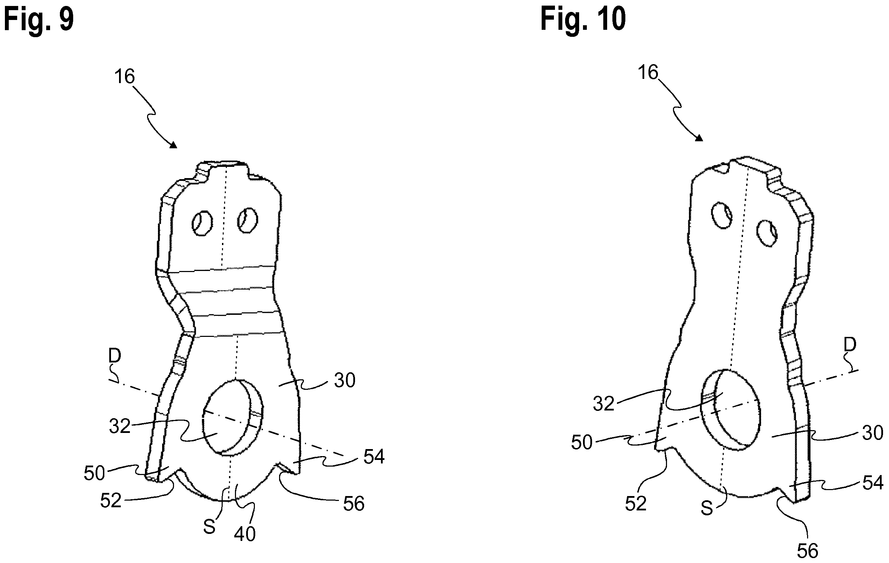

Das Gurtschloss 12 umfasst einen gekröpften Schlossbeschlag 16 (siehe Figur 9). Der Schlossbeschlag 16 ist spiegelsymmetrisch zu einer Mittelebene S gestaltet. In einer alternativen Ausführungsform kann der Schlossbeschlag 16 nicht gekröpft, d. h. gerade bzw. eben gestaltet sein (siehe Figur 10).

Der Befestigungsabschnitt 30 weist eine erste Schlossanschlagnase 50 mit einem ersten Schlossanschlag 52 und eine entgegengesetzt angeordnete zweite Schlossanschlagnase 54 mit einem zweiten Schlossanschlag 56 auf, die sich in radialer Richtung von der Drehachse D weg erstrecken. In einer alternativen Ausführungsform können der erste Schlossanschlag 52 und der zweite Schlossanschlag 56 an einer einzigen Schlossanschlagnase vorgesehen sein, die vorzugsweise auf der Mittelebene S angeordnet ist, sodass die Spiegelsymmetrie des Schlossbeschlags 16 erhalten bleibt.

Wie in Figur 5 zu sehen ist, ist der Abstand A der Drehachse D zur Basis 20 größer als der Abstand B der Drehachse D zum Ende 40 des Befestigungsabschnitts 30. Das bedeutet, dass der Befestigungsabschnitt 30 in der Mittelposition des Gurtschlosses 12, die in diesem Fall eine in etwa senkrechte Stellung des Gurtschlosses 12 gegenüber der Basis 20 darstellt, nicht in die Ausnehmung 28 hineinragt.

In dieser Ausführungsform ist das Federelement 38 zwischen der Seitenwand 18 und dem Befestigungsabschnitt 30 angeordnet (siehe Figur 6), sodass der Befestigungsabschnitt 30 von der Seitenwand 18 weg beaufschlagt wird. Auf diese Weise wird sichergestellt, dass der Befestigungsabschnitt 30 über der Anschlagnase 48 angeordnet ist, d. h. in radialer Richtung zwischen der Drehachse D und der Anschlagnase 48.

Das Gurtschloss 12 ist um die Drehachse D drehbar am Ankerbeschlag 14 gelagert und lässt sich aus der Mittelposition in einer ersten Drehrichtung R und einer entgegengesetzten zweiten Drehrichtung V um die Drehachse D drehen. Die Ausnehmung 28 weist dabei eine Größe auf und der Befestigungsabschnitt 30 ist derart angeordnet, dass die erste Schlossanschlagnase 50 und die zweite Schlossanschlagnase 54 in die Ausnehmung 28 eintauchen, wenn das Gurtschloss 12 in der ersten Drehrichtung R bzw. der zweiten Drehrichtung V entsprechend weit gedreht wird. Die Schlossanschlagnasen 50, 54 und die Anschlagnase 48 bilden hierbei einen Anschlag, der die maximale Drehung des Gurtschlosses 12 begrenzt. Dabei schlägt der erste Schlossanschlag 52 an einem ersten Ankeranschlag 58 an, der durch eine Seite der Anschlagnase 48 gebildet wird, und begrenzt damit die Drehung des Gurtschlosses 12 in der ersten Drehrichtung R. In der zweiten Drehrichtung V wird die Drehung des Gurtschlosses 12 dadurch begrenzt, dass der zweite Schlossanschlag 56 an einem zweiten Ankeranschlag 60 anschlägt, der durch eine zweite entgegengesetzte Seite der Anschlagnase 48 gebildet wird.

Je nachdem an welcher Stelle in der Ausnehmung 28 die Anschlagnase 48 und damit der erste und der zweite Ankeranschlag 58, 60 angeordnet sind, können mit einem symmetrischen Schlossbeschlag 16 verschiedene maximale Auslenkungen des Gurtschlosses 12 in den Drehrichtungen R, V eingestellt werden. In der dargestellten Ausführungsform ist die Anschlagnase 48 direkt zentral unterhalb der Drehachse D angeordnet, sodass das Gurtschloss 12 in der ersten Drehrichtung R und der zweiten Drehrichtung V gleich weit auslenkbar ist.

Als Ankeranschläge 58, 60 können auch die Seitenwände der Ausnehmung 28 vorgesehen sein, d. h., es muss keine Anschlagnase 48 vorhanden sein, die die Ankeranschläge 58, 60 aufweist.

In den Figuren 7 und 8 ist eine dritte Ausführungsform der Gurtschlossbaugruppe 10 gezeigt. Für gleiche Strukturen mit gleichen Funktionen sind im Folgenden daher wieder entsprechende Bezugszeichen vergeben.

In dieser Ausführungsform ist der gabelförmige Befestigungsabschnitt 46 entgegengesetzt zur Seitenwand 18 im Ankerbeschlag 14 angeordnet. Der Ankerbeschlag 14 umfasst ferner ein pfeilförmiges Befestigungselement 62, das an einem zweiten Ende 64 der Basis 20 senkrecht von der Basis 20 absteht.

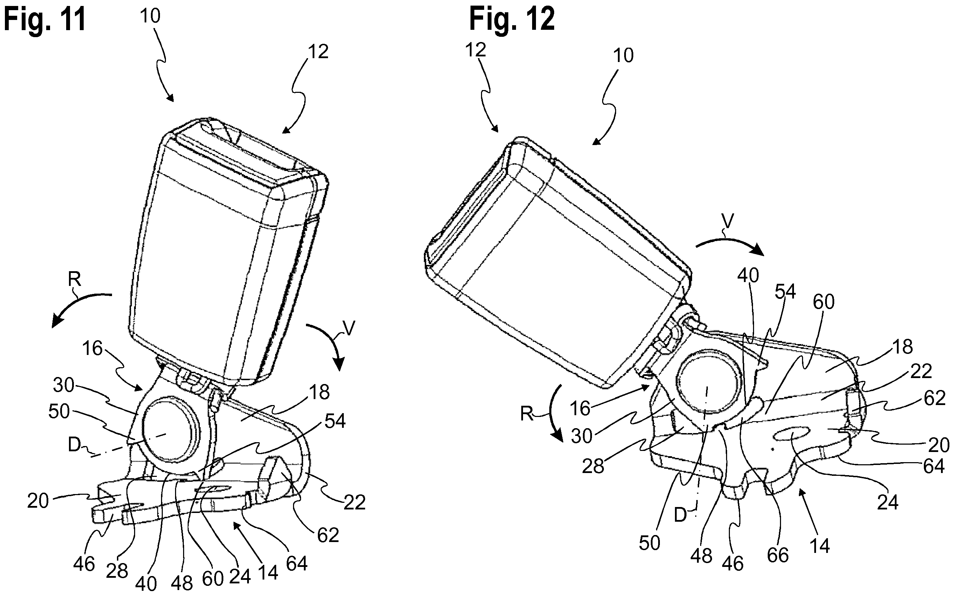

Im Gegensatz zur zweiten Ausführungsform ist in dieser dargestellten Ausführungsform die Ausnehmung 28 asymmetrisch gestaltet (siehe Figur 8). Hierbei ist ein Bereich 66 der Ausnehmung 28, der dem zweiten Ende 64 zugewandt ist, kleiner ausgebildet, sodass der zweite Ankeranschlag 60 durch die Basis 20 bzw. den Übergangsabschnitt 22 gebildet ist (siehe Figur 12).

Hierdurch schlägt die zweite Schlossanschlagnase 54 in der maximalen Auslenkungsposition des Gutschlosses 12 in Drehrichtung V an der Basis 20 und/oder dem Übergangsabschnitt 22 außerhalb der Ausnehmung 28 an (siehe Figur 11), d.h., die zweite Schlossanschlagnase 54 taucht nicht in die Ausnehmung 28 ein. Auf der anderen Seite liegt die erste Schlossanschlagnase 50 in der maximalen Auslenkungsposition des Gutschlosses 12 in Drehrichtung R an dem ersten Ankeranschlag 58 der Anschlagnase 48 an und ist zum Teil in der Ausnehmung 28 angeordnet (siehe Figur 12).

Indem einer der Ankeranschläge 58, 60 durch die Basis 20 und/oder den Übergangsabschnitt 22 gebildet ist, kann die maximale Auslenkung des Gurtschlosses 12 in der entsprechenden Drehrichtung R, V gegenüber einem Ankeranschlag 58, 60, bei dem die Schlossanschlagnase 50, 54 in die Ausnehmung 28 eintaucht, reduziert werden.

In einer alternativen Ausführungsform kann die Anschlagnase 48 zumindest Teilweise außerhalb der Ausnehmung 28 vorgesehen sein, beispielsweise von der Basis 20, dem Übergangsabschnitt 22 und/oder der Seitenwand 18 abstehend. Auf diese Weise können die Ankeranschläge 58, 60 zwischen der Basis 20 und der entsprechenden Schlossanschlagnase 50, 54 angeordnet sein, wodurch die maximale Auslenkung des Gutschlosses 12 weiter einschränkt sein kann.

Auf diese Weise lassen sich unterschiedliche maximale Auslenkungen des Gurtschlosses 12 in den Drehrichtungen R, V einstellen, selbst wenn das Gurtschloss 12 einen Schlossbeschlag 16 mit symmetrisch angeordneten Schlossanschlagnasen 50, 54 aufweist.

Durch die Gestaltung des Ankerbeschlags 14 mit einer Ausnehmung 28, in die der Schlossbeschlag 16 eintauchen kann bzw. in der der Schlossbeschlag 16 in wenigstens einer Position des Gurtschlosses 12 zumindest abschnittsweise angeordnet ist, kann die Gurtschlossbaugruppe 10 besonders kompakt gestaltet sein. Ferner kann der Schlossbeschlag 16 flexibel für unterschiedliche Schwenkbereiche eingesetzt werden, indem die Ankeranschläge 58, 60 an entsprechenden Stellen am Ankerbeschlag 14 vorgesehen sind.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig kombinierbar.

## Patentansprüche

1. Gurtschlossbaugruppe (10) mit einem Ankerbeschlag (14) und einem Schlossbeschlag (16), der um eine Drehachse (D) drehbar am Ankerbeschlag (14) befestigt ist, wobei der Ankerbeschlag (14) eine Ausnehmung (28) aufweist und der Schlossbeschlag (16) in wenigstens einer Position abschnittsweise in die Ausnehmung (28) hineinragt, und wobei der Ankerbeschlag (14) eine Seitenwand (18), die zur Befestigung des Schlossbeschlags (16) vorgesehen ist, und eine Basis (20) aufweist, die unter einem Winkel (a) kleiner 180° zur Seitenwand (18) steht, **dadurch gekennzeichnet, dass** die Basis (20) die Ausnehmung (28) zumindest abschnittsweise umfasst.

2. Gurtschlossbaugruppe nach Anspruch 1, **dadurch gekennzeichnet, dass** der Schlossbeschlag (16) einen Befestigungsabschnitt (30) aufweist, mittels dem der Schlossbeschlag (16) am Ankerbeschlag (14) befestigt ist, wobei der Befestigungsabschnitt (30) in wenigstens einer Position des Schlossbeschlags (16) zumindest abschnittsweise in der Ausnehmung (28) angeordnet ist.

3. Gurtschlossbaugruppe nach einem der vorhergehenden Ansprüche, **dadurch gekennzeichnet, dass** der Winkel zwischen der Seitenwand (18)und der Basis (20) vorzugsweise zwischen 30° und 150°, weiter bevorzugt zwischen 80° und 100°, insbesondere von 90° ist.

4. Gurtschlossbaugruppe nach einem der vorhergehenden Ansprüche, **dadurch gekennzeichnet, dass** die Seitenwand (18) mittels eines Übergangsabschnitts (22) mit der Basis (20) verbunden ist und die Ausnehmung (28) zumindest abschnittsweise im Übergangsabschnitt (22) vorgesehen ist.

5. Gurtschlossbaugruppe nach einem der vorhergehenden Ansprüche, **dadurch gekennzeichnet, dass** die Basis (20) eine Befestigungseinrichtung (24) zur Befestigung der Gurtschlossbaugruppe (10) aufweist.

6. Gurtschlossbaugruppe nach einem der vorhergehenden Ansprüche, **dadurch gekennzeichnet, dass** der Schlossbeschlag (16) auf der Seite der Seitenwand (18) vorgesehen ist, auf der sich die Basis (20) von der Seitenwand (18) weg erstreckt.

7. Gurtschlossbaugruppe nach einem der vorhergehenden Ansprüche, **dadurch gekennzeichnet, dass** der Schlossbeschlag (16) einen ersten Schlossanschlag (52) aufweist, der dazu ausgebildet ist, an einem ersten Ankeranschlag (58) des Ankerbeschlags (14) anzuschlagen, wodurch die Drehung des Schlossbeschlags (16) in einer ersten Drehrichtung (R) begrenzt ist.

8. Gurtschlossbaugruppe nach Anspruch 7, **dadurch gekennzeichnet, dass** der Schlossbeschlag (16) einen zweiten Schlossanschlag (56) aufweist, der dazu ausgebildet ist, an einem zweiten Ankeranschlag (60) des Ankerbeschlags (14) anzuschlagen, wodurch die Drehung des Schlossbeschlags (16) in einer zweiten Drehrichtung (V) begrenzt ist.

9. Gurtschlossbaugruppe nach Anspruch 7 oder 8, **dadurch gekennzeichnet, dass** die Ausnehmung (28) den ersten und/oder zweiten Ankeranschlag (58, 60) umfasst.

10. Gurtschlossbaugruppe nach einem der vorhergehenden Ansprüche, **dadurch gekennzeichnet, dass** der Schlossbeschlag (16) spiegelsymmetrisch zu einer Mittelebene (S) gebildet ist.

11. Gurtschlossbaugruppe nach einem der vorhergehenden Ansprüche, **dadurch gekennzeichnet, dass** die Ausnehmung (28) asymmetrisch zur Drehachse (D) gebildet ist.

## Claims

1. A belt buckle assembly (10) comprising an anchor fitting (14) and a buckle fitting (16) rotatably fastened about an axis of rotation (D) on the anchor fitting (14), the anchor fitting (14) having a recess (28) and portions of the buckle fitting (16) protruding in at least one position into the recess (28), and wherein the anchor fitting (14) includes a sidewall (18) provided for fastening the buckle fitting (16) and a base (20) that is at an angle (a) of less than 180° with the side wall (18), **characterized in that** the base (20) at least in portions comprises the recess (28).

2. The belt buckle assembly according to claim 1, **characterized in that** the buckle fitting (16) includes a fastening portion (30) by means of which the buckle fitting (16) is fastened to the anchor fitting (14), wherein the fastening portion (30) is arranged, in at least one position of the buckle fitting (16), at least in portions in the recess (28).

3. The belt buckle assembly according to any one of the preceding claims, **characterized in that** the angle formed between the sidewall (18) and the base (20) preferably ranges from 30° to 150°, further preferred from 80° to 100°, and especially amounts to 90°.

4. The belt buckle assembly according to any one of the preceding claims, **characterized in that** the sidewall (18) is connected to the base (20) by means of a transition portion (22) and at least portions of the recess (28) are provided in the transition portion (22).

5. The belt buckle assembly according to any one of the preceding claims, **characterized in that** the base (20) includes a fastener (24) for fastening the belt buckle assembly (10).

6. The belt buckle assembly according to any one of the preceding claims, **characterized in that** the buckle fitting (16) is provided on the side of the sidewall (18) on which the base (20) extends away from the sidewall (18).

7. The belt buckle assembly according to any one of the preceding claims, **characterized in that** the buckle fitting (16) includes a first buckle abutment (52) that is configured to abut against a first anchor abutment (58) of the anchor fitting (14), thus causing the rotation of the buckle fitting (16) to be limited in a first direction of rotation (R).

8. The belt buckle assembly according to claim 7, **characterized in that** the buckle fitting (16) includes a second buckle abutment (56) that is configured to abut against a second anchor abutment (60) of the anchor fitting (14), thus causing the rotation of the buckle fitting (16) to be limited in a second direction of rotation (V).

9. The belt buckle assembly according to claim 7 or 8, **characterized in that** the recess (28) comprises the first and/or second anchor abutment (58, 60).

10. The belt buckle assembly according to any one of the preceding claims, **characterized in that** the buckle fitting (16) is formed to be mirror-symmetrical to a center plane (S).

11. The belt buckle assembly according to any one of the preceding claims, **characterized in that** the recess (28) is formed to be asymmetrical to the axis of rotation (D).

## Revendications

1. Ensemble de boucle de ceinture (10) comprenant une ferrure d'ancrage (14) et une ferrure de boucle (16) montée de manière rotative sur la ferrure d'ancrage (14) autour d'un axe de rotation (D), pour lequel la ferrure d'ancrage (14) a un évidement (28) et la ferrure de boucle (16) fait saillie dans l'évidement (28) en parties dans au moins une position, et pour lequel la ferrure d'ancrage (14) présente une paroi latérale (18), qui est prévue pour fixer la ferrure de boucle (16), et une base (20), qui forme un angle (a) inférieur à 180° avec la paroi latérale (18), **caractérisé en ce que** la base (20) entoure l'évidement (28) au moins partiellement.

2. Ensemble de boucle de ceinture selon la revendication 1, **caractérisé en ce que** la ferrure de boucle (16) comprend une partie de fixation (30) au moyen de laquelle la ferrure de boucle (16) est fixée à la ferrure d'ancrage (14), pour lequel la partie de fixation (30) est disposée dans au moins une position de la ferrure de boucle (16) au moins en partie dans l'évidement (28).

3. Ensemble de boucle de ceinture selon l'une des revendications précédentes, **caractérisé en ce que** l'angle entre la paroi latérale (18) et la base (20) est de préférence compris entre 30° et 150°, plus préférentiellement entre 80° et 100°, en particulier de 90°.

4. Ensemble boucle de ceinture selon l'une quelconque des revendications précédentes, **caractérisé en ce que** la paroi latérale (18) est reliée à la base (20) au moyen d'une section de transition (22) et que l'évidement (28) est prévu au moins en partie dans la section de transition (22).

5. Ensemble de boucle de ceinture selon l'une quelconque des revendications précédentes, **caractérisé en ce que** ladite base (20) comprend un moyen de fixation (24) pour fixer ledit ensemble boucle de ceinture (10).

6. Ensemble boucle de ceinture selon l'une quelconque des revendications précédentes, **caractérisé en ce que** la ferrure de boucle (16) est prévue sur le côté de la paroi latérale (18) sur lequel la base (20) s'étend en s'éloignant de la paroi latérale (18).

7. Ensemble de boucle de ceinture selon l'une quelconque des revendications précédentes, **caractérisé en ce que** la ferrure de boucle (16) comprend une première butée de boucle (52), laquelle est conçue pour venir en butée contre une première butée d'ancrage (58) de la ferrure d'ancrage (14), limitant ainsi la rotation de la ferrure de boucle (16) dans un premier sens de rotation (R).

8. Ensemble de boucle de ceinture selon la revendication 7, **caractérisé en ce que** ladite ferrure de boucle (16) comprend une seconde butée de boucle (56), laquelle est conçue pour venir en butée contre une seconde butée d'ancrage (60) de ladite ferrure d'ancrage (14), limitant ainsi la rotation de ladite ferrure de boucle (16) dans une seconde direction de rotation (V).

9. Ensemble de boucle de ceinture selon la revendication 7 ou 8, **caractérisé en ce que** ledit évidement (28) comprend ladite première et/ou seconde butée d'ancrage (58, 60).

10. Ensemble de boucle de ceinture selon l'une quelconque des revendications précédentes, **caractérisé en ce que** la ferrure de boucle (16) est formée en symétrie miroir par rapport à un plan médian (S).

11. Ensemble de boucle de ceinture selon l'une quelconque des revendications précédentes, **caractérisé en ce que** l'évidement (28) est formé de manière asymétrique par rapport à l'axe de rotation (D).
